(19) Europäisches Patentamt / European Patent Office / Office européen des brevets

(11) **EP 2 535 571 B1**

(12) **FASCICULE DE BREVET EUROPEEN**

(45) Date de publication et mention
de la délivrance du brevet:
**17.10.2018   Bulletin 2018/42**

(51) Int Cl.:
***F03D 7/02*** *(2006.01)*      ***F03D 7/04*** *(2006.01)*

(21) Numéro de dépôt: **12290166.3**

(22) Date de dépôt: **16.05.2012**

(54) **Procédé pour optimiser la puissance récupérée par une éolienne en réduisant l'impact mécanique sur la structure.**

Verfahren zur Optimierung der erzeugten Leistung einer Windkraftanlage durch Reduzierung der mechanischen Einwirkung auf die Struktur

Method for optimising the power recovered by wind turbine by reducing the mechanical impact on the structure.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **17.06.2011   FR 1101879**

(43) Date de publication de la demande:
**19.12.2012   Bulletin 2012/51**

(73) Titulaire: **IFP Energies nouvelles
92500 Rueil-Malmaison (FR)**

(72) Inventeurs:
• **Chauvin, Jonathan
75017 Paris (FR)**
• **Creff, Yann
38138 Les Côtes d'Arey (FR)**

(74) Mandataire: **IFP Energies nouvelles
Rond-point de l'échangeur de Solaize
BP3
69230 Solaize (FR)**

(56) Documents cités:
**EP-A2- 2 112 376        WO-A1-2008/041066
WO-A1-2010/016764     US-A1- 2006 033 338**

• **BOSSANYI E A: "The Design of Closed Loop Controllers forWind Turbines", WIND ENERGY, JOHN WILEY & SONS, vol. 3, no. 3, 1 janvier 2000 (2000-01-01) , pages 149-163, XP007908706, ISSN: 1095-4244, DOI: 10.1002/WE.34 [extrait le 2001-07-19]**
• **VLAHO PETROVIC ET AL: "Identification of wind turbine model for individual pitch controller design", UNIVERSITIES POWER ENGINEERING CONFERENCE, 2008. UPEC 2008. 43RD INTERNATIONAL, IEEE, PISCATAWAY, NJ, USA, 1 septembre 2008 (2008-09-01), pages 1-5, XP031349098, ISBN: 978-1-4244-3294-3**

**Description**

La présente invention concerne le domaine des énergies renouvelables et plus particulièrement le contrôle des éoliennes.

Une éolienne permet de transformer l'énergie cinétique du vent en énergie électrique ou mécanique. Elle se compose des éléments suivants :

- Un mât permet de placer le rotor à une hauteur suffisante pour permettre son mouvement (nécessaire pour les éoliennes à axe horizontal) ou placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, etc.).

- Une nacelle montée au sommet du mât, abritant les composants mécaniques, pneumatiques, certains composants électriques et électroniques, nécessaires au fonctionnement de la machine. La nacelle peut tourner pour orienter la machine dans la bonne direction.

- Un rotor, composé de plusieurs pales (en général trois) et du nez de l'éolienne, fixé à la nacelle. Le rotor est entraîné par l'énergie du vent, il est reliée par un arbre mécanique directement ou indirectement (via un système de boite de vitesse et d'arbre mécanique) à la machine électrique (générateur électrique...) qui convertit l'énergie recueillie en énergie électrique.

Dans le cas de l'éolien offshore, on distingue le cas où l'éolienne est posée sur le fond marin (éolienne posée ou fondée), et le cas où l'éolienne est supportée par une plate-forme qui flotte sur la mer et qui est ancrée avec le fond (éolienne flottante).

La perspective d'augmentation de production d'énergie éolienne nécessite le développement d'outils de production efficaces, et des outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale à environ 15 m/s. Il est en fait inutile de concevoir des éoliennes qui maximalisent leur rendement à des vitesses de vent encore plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Les contrôleurs linéaires ont été largement utilisés pour la régulation de puissance par le contrôle de l'angle d'inclinaison des pales (orientation des pales). On connaît des techniques utilisant des contrôleurs PI et PID, des techniques de contrôle LQ et LQG, des stratégies basées sur des commandes linéaires robustes.

Toutefois, les performances de ces contrôleurs linéaires sont limitées par les caractéristiques fortement non linéaires de l'éolienne. Des premières stratégies basées sur des commandes non linéaires ont été utilisées dans : Boukhezzar B., Lupu L., Siguerdidjane H., Hand M. "Multivariable control strategy for variable speed, variable pitch wind turbines" Renewable Energy, 32 (2007) 1273-1287

EP2 112 376 A2 et US 2006/0033338 A1 divulguent des stratégies de contrôle alternatives des éoliennes.

Cependant, aucun de ces contrôleurs ne permet de prendre en compte l'impact mécanique (fatigue et moment extrême) sur la structure.

L'objet de l'invention concerne un procédé pour optimiser la production d'énergie électrique d'une éolienne à axe horizontal, en effectuant un contrôle non linéaire de l'orientation des pales prenant en compte les dynamiques du système, tout en minimisant l'impact mécanique sur la structure. L'impact est minimisé en modifiant l'angle d'inclinaison des pales de façon à ce que la force aérodynamique appliquée à la nacelle conduise à une vitesse nulle du haut du mât. Le procédé s'appuie notamment sur un modèle physique de la force aérodynamique.

**Le procédé selon l'invention**

De façon générale, l'invention concerne un procédé pour optimiser la production d'énergie électrique d'une éolienne à axe horizontal, ladite éolienne comportant un mât supportant une nacelle munie d'un rotor sur lequel des pales sont fixées, dans lequel on contrôle un angle d'inclinaison desdites pâles. Le procédé comporte les étapes suivantes :

a) on détermine un premier angle d'inclinaison des pales permettant d'optimiser la puissance récupérée, au moyen des étapes i, ii, iii et iv;
b) on choisit un modèle de force aérodynamique pour modéliser une force aérodynamique produite sur la nacelle en fonction d'une vitesse de vent, d'un angle d'inclinaison et d'une vitesse du rotor ;

c) on détermine la force aérodynamique produite sur la nacelle lorsque les pales sont orientées avec ledit premier angle ;

d) on détermine une valeur consigne de force aérodynamique produite sur la nacelle lorsque les pales sont orientées avec ledit premier angle, en diminuant ladite force aérodynamique déterminée à l'étape c) par un terme défini de façon à diminuer des variations de vitesse du sommet dudit mât ;

e) on détermine un second angle d'inclinaison des pales permettant d'obtenir ladite valeur consigne de force aérodynamique en inversant ledit modèle de force aérodynamique et en utilisant une mesure de vitesse de vent, une mesure de vitesse du rotor et ladite valeur consigne de force aérodynamique ; et

f) on oriente les pales selon ledit second angle.

Selon l'invention, le terme défini de façon à diminuer des variations de vitesse du sommet du mât est proportionnel à un écart entre des valeurs actuelles de positions et de vitesses du mât et des valeurs de références de positions et de vitesses du mât, une valeur de référence de position étant fonction de la force aérodynamique déterminée à l'étape c), et une valeur de référence de vitesse étant une valeur nulle.

Selon l'invention, le modèle de force aérodynamique en fonction de la vitesse de vent $V_w$, dudit angle d'inclinaison $\theta$ et de la vitesse du rotor $\Omega_r$ peut s'écrire :

$$F_{aero} = 0.5\rho\Pi R_b^2 c_t\left(\theta, \frac{R_b\Omega_r}{V_w}\right)V_w^2$$

Avec :

- $R_b$ : rayon du rotor ;

- $\rho$ : densité de l'air ;

- $c_t$ : paramètre issu de cartographie.

On peut ajouter au terme correspondant à la vitesse du vent du modèle de force aérodynamique, un terme proportionnel à la torsion du mât.

Selon l'invention, on peut déterminer le premier angle d'inclinaison des pales permettant d'optimiser la puissance récupérée, en réalisant les étapes suivantes :

a) on choisit un modèle de couple aérodynamique pour modéliser le couple aérodynamique produit sur la nacelle en fonction d'une vitesse de vent $V_w$, dudit angle d'inclinaison et d'une vitesse du rotor $\Omega_r$.

b) on détermine une valeur consigne de couple aérodynamique au moyen dudit modèle ;

c) on détermine ledit premier angle d'inclinaison des pales permettant d'obtenir ladite valeur consigne de couple aérodynamique en inversant ledit modèle de couple aérodynamique et en utilisant une mesure de vitesse de vent, une mesure de vitesse du rotor et ladite valeur consigne de couple aérodynamique ;

Le modèle de couple aérodynamique peut s'écrire :

$$T_{aero} = 0.5\rho\Pi R_b^3 c_q\left(\theta, \frac{R_b\Omega_r}{V_w}\right)V_w^2)$$

Avec :

- $R_b$ : rayon du rotor ;

- $\rho$ : densité de l'air ;

- $c_q$ : paramètre issu de cartographie

On peut ajouter au terme correspondant à la vitesse du vent dudit modèle de couple aérodynamique, un terme proportionnel à la torsion du mât.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- La figure 1 illustre un exemple de cartographie du paramètre $c_q$.

- La figure 2 illustre un exemple de cartographie du paramètre $c_t$.

- La figure 3 illustre un exemple de cartographie du paramètre $c_p$.

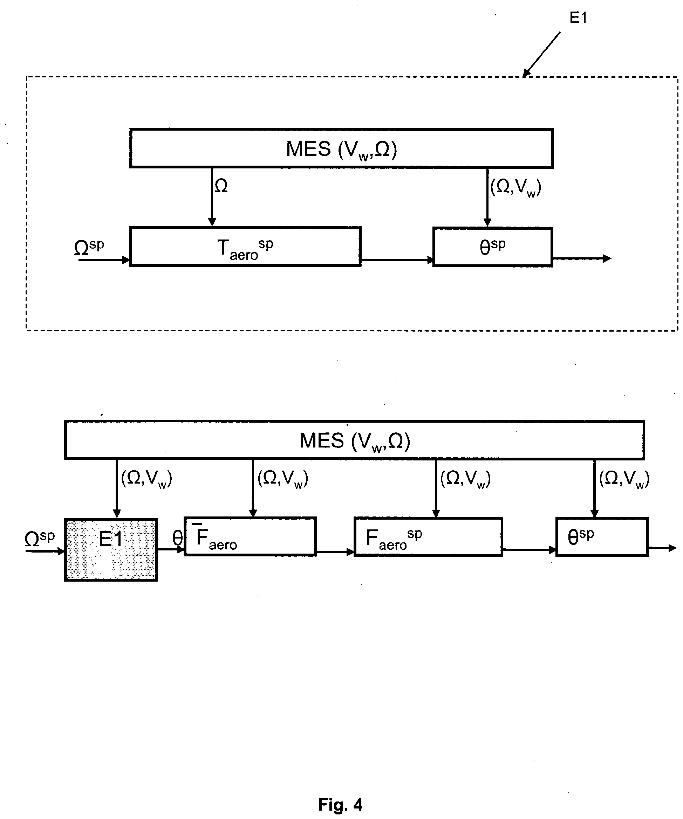

- La figure 4 représente l'enchainement des étapes du procédé selon l'invention.

- La figure 5 illustre un exemple de calibration de couple électrique $T_e$ en fonction de la mesure de vitesse du rotor $\Omega_r$.

**Description détaillée du procédé**

Au cours de la description, les notations suivantes sont utilisées :

*Variables contrôlées :*

- $\theta$ l'angle d'inclinaison des pales en degré (aussi appelé pitch).

- $T_e$ le couple de la machine électrique en Nm.

*Variables mesurées, notées MES(-) :*

- $V_w$ la vitesse du vent en m/s. Cette vitesse est issue d'une mesure à partir d'un anémomètre ou issue d'une estimation.

- $\Omega_r$ la vitesse du rotor en rad/s.

- $T_{aero}$ le couple aérodynamique (effort en rotation appliqué au rotor sous l'effet du vent)

- $x_t$ le déplacement du mât par rapport à son équilibre. Cette position correspond au déplacement horizontal du sommet du mât, en mètre, par rapport à sa position d'équilibre sans vent ni houle.

- $x_p$ le déplacement de la plate-forme par rapport à son équilibre. Cette position correspond au déplacement du point de connexion entre la plateforme et le mât, en mètre, par rapport à sa position d'équilibre sans vent ni houle. Si on ne considère que le cas onshore, cette variable sera supposée constante égale à 0.

Le procédé selon l'invention, pour optimiser la production d'énergie électrique d'une éolienne, comporte les étapes suivantes :

1) on détermine un premier angle d'inclinaison des pales permettant de maximiser la puissance récupérée et un couple de récupération de la machine électrique ;

2) on choisit un modèle de force aérodynamique pour modéliser la force aérodynamique produite sur la nacelle en fonction de la vitesse du vent $V_w$, de l'angle d'inclinaison et de la vitesse du rotor $\Omega_r$.

**4**

3) on détermine la force aérodynamique produite sur la nacelle lorsque les pales sont orientées avec ce premier angle :

4) on détermine une valeur consigne de force aérodynamique produite sur la nacelle lorsque les pales sont orientées avec ce premier angle, en diminuant la force aérodynamique déterminée à l'étape c) par un terme défini de façon à diminuer les variations de vitesse du mât ;

5) on détermine un second angle d'inclinaison des pales permettant d'obtenir la valeur consigne de force aérodynamique en inversant le modèle de force aérodynamique et en utilisant une mesure de vitesse de vent, une mesure de vitesse du rotor et la valeur consigne de force aérodynamique ;

6) on oriente les pales selon ce second angle.

## 1. Détermination du pitch permettant de maximiser la puissance récupérée

Un objectif du procédé selon l'invention est de maximiser la production d'énergie d'une éolienne à axe horizontal (hélice perpendiculaire au vent), implantée sur terre ("onshore") ou en mer ("offshore"), tout en limitant les moments extrêmes et la fatigue de la structure mécanique.

Pour maximiser la production d'énergie d'une éolienne on recherche l'angle d'inclinaison des pales, appelée « pitch » et notée $\theta$, permettant de maximiser la puissance récupérée $P_{aero}$ en fonction de la vitesse du vent $V_w$. L'orientation des pales est l'angle entre les pales et une référence tel que le sol (plan horizontal, perpendiculaire au mât de l'éolienne).

Selon un mode de réalisation, pour définir cet angle, on utilise un modèle de la puissance récupérable. Cette puissance $P_{aero}$ peut s'écrire :

$$P_{aero} = T_{aero} * \Omega_r$$

Avec :

- $T_{aero}$ le couple aérodynamique (effort en rotation appliqué au rotor sous l'effet du vent)
- $\Omega_r$ la vitesse du rotor en rad/s.

On recherche donc l'angle $\theta$ qui permet de maximiser $P_{aero}$. Pour ce faire, on réalise les étapes suivantes :

i- on génère une consigne de couple électrique $T_e^{sp}$ en fonction d'une mesure de vitesse de rotor ;

ii- on génère une consigne de vitesse de rotor consigne $\Omega_r^{sp}$ en fonction d'une mesure de vitesse de vent $V_w$, au moyen de cartographies ;

iii- on génère une consigne de couple aérodynamique $T_{aero}^{sp}$ pour suivre cette consigne de vitesse de rotor ;
iiii- on détermine la position de pitch $\theta$ qui permet de réaliser ce couple aérodynamique et garantir la régulation de la vitesse du rotor ;

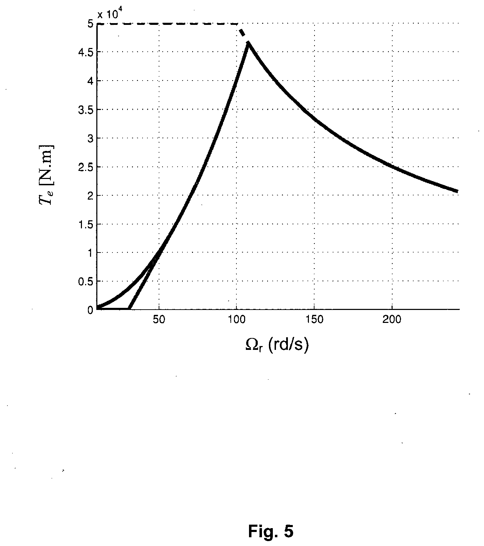

### i - Génération d'une consigne de couple électrique $T_e^{sp}$
On détermine cette consigne en fonction de la mesure de vitesse du rotor. Ce couple est déterminé pour optimiser la récupération d'énergie sous contrainte de la puissance maximum, au moyen d'une cartographie. Un exemple d'une telle cartographie est fourni sur la figure 5, où $T_e$ est représenté en fonction de $\Omega_r$.

### ii - Génération d'une consigne de vitesse de rotor $\Omega_r^{sp}$
On détermine dans un premier temps une consigne de vitesse de rotor $\Omega_r^{sp}$. Cette consigne est obtenue au moyen de cartographies qui sont fonction de la vitesse de vent.
Selon l'invention, on modélise le couple aérodynamique $T_{aero}$ par un modèle décrivant la puissance du vent contenue dans un cylindre, multiplié par un facteur décrivant le fait qu'une éolienne ne permet de récupérer qu'une partie de cette puissance. On modélise ainsi le couple aérodynamique en fonction de la vitesse du vent $V_w$, du pitch $\theta$ et de la vitesse du rotor $\Omega_r$. Un tel modèle peut s'écrire ainsi en régime stabilisé :

$$T_{aero} = 0.5\rho\Pi R_b^3 c_q\left(\theta, \frac{R_b\Omega_r}{V_w}\right)V_w^2 \tag{1}$$

Avec :

- $R_b$ : rayon du rotor ;
- $\rho$ : densité de l'air ;
- $c_q$ : cartographie à calibrer.

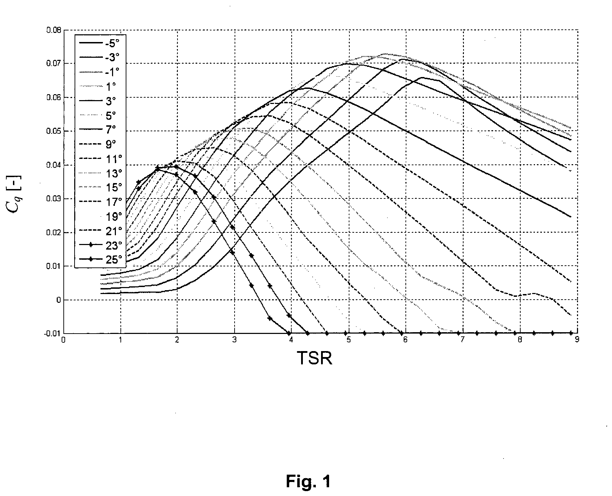

Un exemple de cartographie du paramètre $c_q$ est présenté sur la figure 1. Cette cartographie indique la valeur du paramètre $c_q$ en fonction du rapport $\frac{R_b\Omega_r}{V_w}$, pour différents pitchs (une courbe pour chaque $\theta$). Ce type de carto-graphies est bien connu des spécialistes. Le rapport $\frac{R_b\Omega_r}{V_w}$ est noté TSR sur les figures 1 à 3.

Ainsi, pour déterminer la vitesse de rotor consigne $\Omega_r^{sp}$ en fonction du vent, on optimise la puissance aérodynamique récupérée pour chaque vitesse de vent.

$$\Omega_r^{sp} = \arg\left(\max_{\Omega_r}\left\{0.5\rho\Pi R_b^3 c_q\left(\theta, \frac{R_b\Omega_r}{V_w}\right)V_w^2 * \Omega_r\right\}\right)$$

*iii - Génération d'une consigne de couple aérodynamique* $T_{aero}^{sp}$

Le but est de générer une consigne de couple aérodynamique $T_{aero}^{sp}$ permettant de réaliser la vitesse de rotor consigne $\Omega_r^{sp}$. Pour cela, nous utilisons un modèle de la dynamique du rotor.

$$J_r \frac{d\Omega_r}{dt} = T_{aero} - T_l(\Omega_r) - NT_e$$

Avec :

- $J_r$ : inertie du rotor;
- $T_l(\Omega_r)$ : couple de frottement et de charge sur le rotor (on utilise classiquement un polynôme d'ordre deux) ;
- $N$ : rapport de boîte entre l'axe du rotor et l'axe de la machine électrique.

Ainsi, la stratégie de contrôle utilisée est une stratégie de contrôle dynamique qui anticipe la variation de consigne et qui corrige avec deux termes, un terme proportionnel et un terme intégral. La stratégie s'écrit

$$T_{aero}^{sp} = T_l(\Omega_r) + NT_e(\Omega_r) + J_r \frac{d\Omega_r^{sp}}{dt} - k_p(\Omega_r - \Omega_r^{sp}) - k_i \int(\Omega_r - \Omega_r^{sp})$$

où kp et ki sont deux paramètres réels à calibrer pour garantir la convergence de la vitesse vers sa consigne.

*iiii - Détermination d'une position de pitch θ*

A partir de cette consigne de couple, on détermine une angle d'inclinaison θ des pales pour satisfaire cette demande de couple aérodynamique $T_{aero}^{sp}$. Pour cela, on utilise le modèle de couple aérodynamique (équation 1), avec la mesure de la vitesse du vent $V_w$, la mesure du régime du rotor $\Omega_r^{sp}$ et le couple consigne $T_{aero}^{sp}$. En inversant le modèle (par un algorithme de Newton par exemple), on obtient une consigne de pitch $\overline{\theta}$ :

$$\overline{\theta} = \arg\left( \min_{\theta}\left( T_{aero}^{sp} - 0.5\rho\Pi R_b^3 c_q\left(\theta, \frac{R_b\Omega_r}{V_w}\right)V_w^2\right)^2\right)$$

Ainsi, avec cette loi de commande, on garantit la convergence vers la vitesse rotor de référence, permettant de maximiser la puissance récupérée.

2 - Détermination de la force aérodynamique résultant de cette position de pitch

Un autre objectif de l'invention est de maximiser la production d'énergie tout en limitant les moments extrêmes et la fatigue de la structure mécanique. Pour ce faire, on pilote l'orientation des pales, c'est-à-dire que l'on modifie la consigne $\overline{\theta}$ de l'angle θ de façon à obtenir un compromis entre puissance récupérée et fatigue de la structure. L'impact est minimisé en modifiant l'angle d'inclinaison des pales de façon à ce que la force aérodynamique appliquée à la nacelle conduise à une vitesse nulle du haut du mât. Le procédé s'appuie notamment sur un modèle physique de la force aérodynamique.
Dans un premier temps, on choisit un modèle physique de force aérodynamique pour modéliser la force aérodynamique produite sur la nacelle en fonction d'une vitesse de vent $V_w$, de l'angle d'orientation θ et de la vitesse du rotor $\Omega_r$. Un tel modèle peut s'écrire ainsi. :

$$F_{aero} = 0.5\rho\Pi R_b^2 c_t\left(\theta, \frac{R_b\Omega_r}{V_w}\right)V_w^2 \qquad (2)$$

Avec :

- $R_b$ : rayon du rotor ;
- $\rho$ : densité de l'air ;
- $c_t$ : cartographie à calibrer.

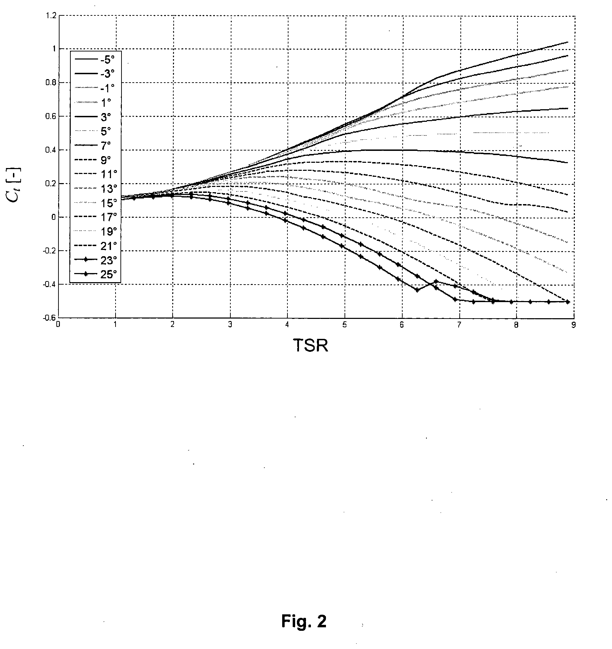

Un exemple de cartographie du paramètre $c_t$ est présenté sur la figure 2. Cette cartographie indique la valeur du paramètre $c_t$ en fonction du rapport $\frac{R_b\Omega_r}{V_w}$, pour différents pitchs (une courbe pour chaque θ). Ce type de cartographies est bien connu des spécialistes.
Cette force est celle qui va fait bouger la nacelle et qui influence la dynamique du mât (et de la plate-forme si l'éolienne est implantée en mer sur une plateforme). En utilisant cette fonction avec le pitch déterminé à l'étape précédente ($\overline{\theta}$), on obtient une force aérodynamique que l'on note $\overline{F}$.

3 - Détermination d'une valeur consigne de force aérodynamique

$F_{aero}^{sp}$
Au cours de cette étape, on détermine une valeur consigne de force aérodynamique produite sur la nacelle lorsque les pales sont orientées avec ledit premier angle, en diminuant ladite force aérodynamique déterminée à l'étape c) par un terme proportionnel défini de façon à diminuer les variations de vitesse dudit mât (et de la plate-forme si l'éolienne est implantée en mer sur une plateforme).

Cette consigne a pour but de diminuer la fatigue et les moments extrêmes de la structure. On cherche à modifier cette force aérodynamique afin de minimiser l'impact sur la structure et donc augmenter sa durée de vie. Pour cela, on cherche à diminuer les variations de vitesse du mât et de la plate-forme. Ainsi, on cherche à compenser la force aérodynamique avec des termes proportionnels à l'écart entre les valeurs actuelles des positions et vitesses de la plate-forme et du mât et leurs valeurs de référence. On appelle valeur de référence la valeur théorique que l'on souhaite obtenir : vitesses du mât et de la plateforme nulles, et position du mât et de la plateforme fonction de $\overline{F}$ et de la force imposée par la mer ($F_{hydro}$).

La dynamique de la structure mécanique, c'est-à-dire du mât (et de la plate-forme si l'éolienne est implantée en mer) peut s'écrire sous la forme de deux systèmes du deuxième ordre couplés :

$$\begin{cases} m_t\,\ddot{x}_t + k_t\,(\dot{x}_t - r\dot{x}_p) + c_t\,(x_t - rx_p) = F_{aero} \\ m_p\,\ddot{x}_p + k_p\,\dot{x}_p + c_p\,x_p - k_t\,(\dot{x}_t - r\dot{x}_p) - c_t\,(x_t - rx_p) = F_{hydro} \end{cases} \quad (3)$$

Avec :

- $m_t$ et $m_p$ sont les masses de l'ensemble mât+nacelle et de la plateforme respectivement;
- $k_t$ et $k_p$ sont les amortissements structurels du mât et de la plateforme;
- $c_t$ et $c_p$ sont les raideurs du mât et de la plateforme;
- $F_{hydro}$ est la force hydrodynamique appliquée sur la structure.

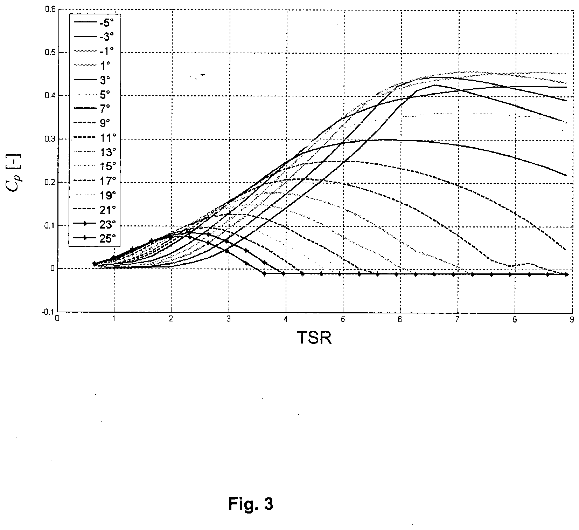

Un exemple de cartographie du paramètre $c_p$ est présenté sur la figure 3. Cette cartographie indique la valeur du paramètre $c_p$ en fonction du rapport $\dfrac{R_b\Omega_r}{V_w}$, pour différents pitchs (une courbe pour chaque $\theta$). Ce type de cartographies est bien connu des spécialistes.

Nous définissons l'état du système par X et son état de référence par Xref

$$X = \begin{bmatrix} x_t \\ \dot{x}_t \\ x_p \\ \dot{x}_p \end{bmatrix} \quad et \quad X_{ref} = \begin{bmatrix} \dfrac{\overline{F}}{c_t} + r\dfrac{(F_{hydro} - \overline{F})}{c_p} \\ 0 \\ \dfrac{(F_{hydro} + \overline{F})}{c_p} \\ 0 \end{bmatrix}$$

Avec r , un paramètre qui correspond au ratio de taille entre le mât et la structure flottante. Cela représente la position du centre de gravité.

Ainsi, la stratégie de contrôle va chercher à générer une force aérodynamique différente de $\overline{F}$ pour minimiser la fatigue et les moments extrêmes de la structure. Nous obtenons donc la consigne suivante :

$$F_{aero}^{sp} = \overline{F} - \begin{bmatrix} k_1 & k_2 & k_3 & k_4 \end{bmatrix}(X - X_{ref})$$

avec k1, k2, k3, et k4 des paramètres de calibration à déterminer. Pour cela, on peut utiliser la technique du placement de pôle ou la technique de synthèse LQR.

4 - Détermination d'une position de pitch qui permet de réaliser cette force aérodynamique.

A partir de cette consigne de force, on détermine une orientation des pales pour satisfaire cette demande de force aérodynamique. Pour cela, nous utilisons le modèle présenté à l'Équation 2. Nous avons une donnée de vent, la mesure du régime du rotor et un couple consigne. En inversant le modèle (par un algorithme de Newton par exemple), on obtient une consigne de pitch. Ainsi, on trouve le pitch qui minimise le critère d'optimisation suivant

$$\theta^{sp} = \arg\left[\min_\theta\left(F^{sp}_{aero} - 0.5\rho\Pi R_b^2 c_t\left(\theta, \frac{R_b\Omega_r}{V_w}\right)(V_w)^2\right)^2\right]$$

Dans le cas d'une éolienne onshore, il n'y a pas de plateforme. Dans ce cas, on considère que la plateforme est rigide et donc que l'on a xp constant à 0 ainsi que la force hydrodynamique. De plus, dans la structure de contrôle, on a nécessairement k3 et k4 nuls car il n'y a pas besoin de contrôle sur la plateforme.

5 - Orientation des pales selon le pitch déterminé

Pour optimiser la puissance électrique récupérée par l'éolienne, on oriente les pales selon l'angle d'inclinaison calculé à l'étape précédente.

**Selon un autre mode de réalisation,** pour améliorer la robustesse vis-à-vis de la fatigue mécanique du système, on ne réalise pas l'inversion du modèle de force aérodynamique (équation 2) directement à partir de la vitesse du vent, mais à partir de cette valeur à laquelle on ajoute un terme proportionnel à la torsion du mât $\dot{x}_t$-$\dot{x}_p$ (avec $\dot{x}$ la dérivée de x par rapport au temps, x représentant la position du mât par rapport à une référence). Ainsi, on trouve le pitch qui minimise le critère d'optimisation suivant :

$$\theta^{sp} = \arg\left[\min_\theta\left(F^{sp}_{aero} - 0.5\rho\Pi R_b^2 c_t\left(\theta, \frac{R_b\Omega_r}{V_w + g_f(\dot{x}_t - r\dot{x}_p)}\right)(V_w + g_f(\dot{x}_t - r\dot{x}_p))^2\right)^2\right]$$

Avec :

- r : un paramètre qui correspond au ratio de taille entre le mât et la structure flottante. Cela représente la position du centre de gravité ;
- $g_f$ : une fonction monotone non décroissante (typiquement une constante égale à l'identité).

Ainsi avec cette loi de commande, on garantit la convergence vers la vitesse rotor de référence tout en ayant un second contrôle sur la fatigue du système en anticipant le vent arrivant sur la structure grâce au terme proportionnel à la torsion du mât.

De même, pour améliorer la robustesse vis-à-vis de la fatigue mécanique du système, on ne réalise pas l'inversion du modèle de couple aérodynamique (équation 1) directement à partir de la vitesse du vent, mais à partir de cette valeur à laquelle on ajoute un terme proportionnel à la torsion du mât $\dot{x}_t$-$\dot{x}_p$ (avec $\dot{x}$ la dérivée de x par rapport au temps, x représentant la position du mât par rapport à une référence). Ainsi, on trouve le pitch qui minimise le critère d'optimisation suivant

$$\bar{\theta} = \arg\left[\min_\theta\left(T^{sp}_{aero} - 0.5\rho\Pi R_b^3 c_q\left(\theta, \frac{R_b\Omega_r}{V_w + g_t(\dot{x}_t - r\dot{x}_p)}\right)(V_w + g_t(\dot{x}_t - r\dot{x}_p))^2\right)^2\right]$$

Avec :

- r : un paramètre qui correspond au ratio de taille entre le mât et la structure flottante. Cela représente la position du centre de gravité ;
- $g_t$ : une fonction monotone non décroissante (typiquement une constante égale à l'identité).

Ainsi avec cette loi de commande, on garantit la convergence vers la vitesse rotor de référence tout en ayant un contrôle sur la fatigue du système en anticipant le vent arrivant sur la structure grâce au terme proportionnel à la torsion du mât.

Un exemple de valeur pour chaque paramètre est présenté dans le tableau ci-après :

| | |
|---|---|
| $R_b$ | 63 m |
| $\rho$ | 1,293 kg/m$^3$. |
| $J_r$ | 4.3785e+007 kg/m2 |
| N | 93 |
| $m_t$ | 350000 |
| $k_t$ | 9.3462e+004 |
| $c_t$ | 2.4958e+006 |
| $M_p$ | 21808000 |
| $K_p$ | 2.1179e+005 |
| $C_p$ | 3.2137e+005 |
| K1 | -3.1237e-006 |
| K2 | 2.9282e-004 |
| K3 | -2.6337e-005 |
| K4 | 0.1452 |
| r | 1 |

## Revendications

1. Procédé pour optimiser la production d'énergie électrique d'une éolienne à axe horizontal, ladite éolienne comportant un mât supportant une nacelle munie d'un rotor sur lequel des pales sont fixées, dans lequel on contrôle un angle d'inclinaison desdites pâles, **caractérisé en ce qu'**il comporte les étapes suivantes :

   a) on détermine un premier angle d'inclinaison des pales permettant de maximiser la puissance récupérée, au moyen des étapes suivantes :

   i- on génère une consigne de couple électrique $T_e^{sp}$ dudit rotor en fonction d'une mesure de vitesse de rotor ;
   ii- on génère une consigne de vitesse de rotor consigne $\Omega_r^{sp}$ en fonction d'une mesure de vitesse de vent $V_w$, au moyen de cartographies ;
   iii- on génère une consigne de couple aérodynamique $T_{aero}^{sp}$ pour suivre cette consigne de vitesse de rotor ;
   iv- on détermine ledit premier angle d'inclinaison qui permet de réaliser ce couple aérodynamique et garantir la régulation de la vitesse du rotor ;

   b) on choisit un modèle de force aérodynamique pour modéliser une force aérodynamique produite sur la nacelle en fonction d'une vitesse de vent, d'un angle d'inclinaison et d'une vitesse du rotor ;
   c) on détermine la force aérodynamique produite sur la nacelle lorsque les pales sont orientées avec ledit premier angle ;
   d) on détermine une valeur consigne de force aérodynamique produite sur la nacelle lorsque les pales sont orientées avec ledit premier angle, en diminuant ladite force aérodynamique déterminée à l'étape c) par un terme défini de façon à diminuer des variations de vitesse du sommet dudit mât ;
   e) on détermine un second angle d'inclinaison des pales permettant d'obtenir ladite valeur consigne de force aérodynamique en inversant ledit modèle de force aérodynamique et en utilisant une mesure de vitesse de vent, une mesure de vitesse du rotor et ladite valeur consigne de force aérodynamique ; et
   f) on oriente les pales selon ledit second angle.

2. Procédé selon la revendication 1, dans lequel ledit terme défini de façon à diminuer des variations de vitesse du sommet dudit mât est proportionnel à un écart entre des valeurs actuelles de positions et de vitesses du mât et des valeurs de références de positions et de vitesses du mât, une valeur de référence de position étant fonction de ladite force aérodynamique déterminée à l'étape c), et une valeur de référence de vitesse étant une valeur nulle.

3. Procédé selon l'une des revendications précédentes, dans lequel ledit modèle de force aérodynamique en fonction de la vitesse de vent $V_w$, dudit angle d'inclinaison $\theta$ et de la vitesse du rotor $\Omega_r$ s'écrit :

$$F_{aero} = 0.5\rho\Pi R_b^2 c_t V_w^2$$

Avec :

- $R_b$ : rayon du rotor ;
- $\rho$ : densité de l'air ;

- $c_t$ : paramètre issu de cartographie et fonction de $\dfrac{R_b\Omega_r}{V_w}$ et de $\theta$.

4. Procédé selon la revendication 3, dans lequel on ajoute au terme correspondant à la vitesse du vent dudit modèle de force aérodynamique, un terme proportionnel à la torsion du mât.

5. Procédé selon l'une des revendications précédentes, dans lequel on détermine ledit premier angle d'inclinaison des pales permettant d'optimiser la puissance récupérée, en réalisant les étapes suivantes :

a) on choisit un modèle de couple aérodynamique pour modéliser le couple aérodynamique produit sur la nacelle en fonction d'une vitesse de vent $V_w$, dudit angle d'inclinaison et d'une vitesse du rotor $\Omega_r$.
b) on détermine une valeur consigne de couple aérodynamique au moyen dudit modèle ;
c) on détermine ledit premier angle d'inclinaison des pales permettant d'obtenir ladite valeur consigne de couple aérodynamique en inversant ledit modèle de couple aérodynamique et en utilisant une mesure de vitesse de vent, une mesure de vitesse du rotor et ladite valeur consigne de couple aérodynamique.

6. Procédé selon la revendication 5, dans lequel ledit modèle de couple aérodynamique s'écrit :

$$T_{aero} = 0.5\rho\Pi R_b^2 c_q V_w^2$$

Avec :

- $R_b$ : rayon du rotor ;
- $\rho$ : densité de l'air ;

- $c_q$ : paramètre issu de cartographie et fonction de $\dfrac{R_b\Omega_r}{V_w}$ et de $\theta$.

7. Procédé selon la revendication 6, dans lequel on ajoute au terme correspondant à la vitesse du vent dudit modèle de couple aérodynamique, un terme proportionnel à la torsion du mât.

**Patentansprüche**

1. Verfahren zur Optimierung der Stromerzeugung eines Windrades mit horizontaler Achse, wobei das Windrad einen Masten umfasst, der eine Gondel trägt, die mit einem Rotor versehen ist, auf dem Flügel befestigt sind, wobei ein Neigungswinkel der Flügel kontrolliert wird, **dadurch gekennzeichnet, dass** es die folgenden Schritte umfasst:

a) Bestimmung eines ersten Neigungswinkels der Flügel, der es ermöglicht, die rückgewonnene Leistung zu maximieren, mit Hilfe der folgenden Schritte:

i) Erzeugung eines elektrischen Drehmomentsollwerts $T^{sp}_r$ des Rotors in Abhängigkeit von einer Messung einer Rotorgeschwindigkeit;

ii) Erzeugung eines Rotorgeschwindigkeitssollwerts $\Omega^{sp}_r$ in Abhängigkeit von einer Messung einer Windgeschwindigkeit $V_{wr}$ mit Hilfe von Kartographien;

iii) Erzeugung eines aerodynamischen Drehmomentsollwerts $T^{sp}_{aero}$, um diesen Rotorgeschwindigkeitssollwert zu verfolgen;

iv) Bestimmung des ersten Neigungswinkels, der es ermöglicht, dieses aerodynamische Drehmoment zu verwirklichen und die Regelung der Geschwindigkeit des Rotors zu gewährleisten.

b) Auswahl eines aerodynamischen Kraftmodells, um eine auf der Gondel erzeugte aerodynamische Kraft in Abhängigkeit von einer Windgeschwindigkeit, einem Neigungswinkel und einer Geschwindigkeit des Rotors zu modellieren;

c) Bestimmung der auf der Gondel erzeugten aerodynamischen Kraft, wenn die Flügel mit dem ersten Winkel ausgerichtet sind;

d) Bestimmung eines Sollwerts einer auf der Gondel erzeugten aerodynamischen Kraft, wenn die Flügel mit dem ersten Winkel ausgerichtet sind, wobei die in Schritt c) bestimmte aerodynamische Kraft durch einen definieren Term verringert wird, um Geschwindigkeitsvariationen der Spitze des Masten zu verringern;

e) Bestimmung eines zweiten Neigungswinkels der Flügel, der es ermöglicht, den Sollwert einer aerodynamischen Kraft zu erhalten, wobei das aerodynamische Kraftmodell umgekehrt wird und eine Messung einer Windgeschwindigkeit, eine Messung einer Rotorgeschwindigkeit und der Sollwert einer aerodynamischen Kraft verwendet werden; und

f) Ausrichten der Flügel nach dem zweiten Winkel.

2. Verfahren nach Anspruch 1, bei dem der definierte Term, um Geschwindigkeitsvariationen der Spitze des Masten zu verringern, zu einer Abweichung zwischen aktuellen Positions- und Geschwindigkeitswerten des Masten und Positions- und Geschwindigkeitsreferenzwerten des Masten proportional ist, wobei ein Positionsreferenzwert von der in Schritt c) bestimmten aerodynamischen Kraft abhängt, und ein Geschwindigkeitsreferenzwert ein Nullwert ist.

3. Verfahren nach einem der vorhergehenden Ansprüche, bei dem das aerodynamische Kraftmodell in Abhängigkeit von der Windgeschwindigkeit $V_{wr}$, dem Neigungswinkel $\theta$ und der Geschwindigkeit des Rotors $\Omega_r$ folgendermaßen geschrieben wird:

$$F_{aero} = 0.5 \varrho \pi R_b^2 c_t V_w^2$$

wobei:

- $R_b$: Radius des Rotors;

- $\varrho$ : Dicht der Luft;

- $c_i$: Parameter, der aus der Kartographie stammt und von $\dfrac{R_b \Omega_r}{V_w}$ und von $\theta$ abhängt.

4. Verfahren nach Anspruch 3, bei dem zu dem Term entsprechend der Geschwindigkeit des Windes des aerodynamischen Kraftmodells ein Term proportional zur Torsion des Masten hinzugefügt wird.

5. Verfahren nach einem der vorhergehenden Ansprüche, bei dem der erste Neigungswinkel der Flügel bestimmt wird, der es ermöglicht, die rückgewonnene Leistung zu optimieren, wobei die folgenden Schritte durchgeführt werden:

a) Auswahl eines aerodynamischen Kraftmodells, um das auf der Gondel erzeugte aerodynamische Drehmoment in Abhängigkeit von einer Windgeschwindigkeit $V_{wr}$, dem Neigungswinkel und einer Geschwindigkeit des Rotors $\Omega$ zu modellieren;

b) Bestimmung eines Sollwerts eines aerodynamischen Drehmoments mit Hilfe des Modells;

c) Bestimmung des ersten Neigungswinkels der Flügel, der es ermöglicht, den Sollwert eine aerodynamischen Drehmoments zu erhalten, wobei das aerodynamische Drehmomentmodell umgekehrt wird und eine Messung einer Windgeschwindigkeit, eine Messung einer Rotorgeschwindigkeit und der Sollwert eines aerodynamischen Drehmoments verwendet werden.

6. Verfahren nach Anspruch 5, bei dem das aerodynamische Drehmomentmodell folgendermaßen geschrieben wird:

$$T_{aero} = 0.5 \varrho \pi R_b^2 c_q V_w^2$$

wobei:

- $R_b$: Radius des Rotors;

- $\varrho$ : Dicht der Luft;

- $c_q$: Parameter, der aus der Kartographie stammt und $\dfrac{R_b \Omega_r}{V_w}$ und von $\theta$ abhängt.

7. Verfahren nach Anspruch 6, bei dem zu dem Term entsprechend der Geschwindigkeit des Windes des aerodynamischen Drehmomentmodells ein Term proportional zur Torsion des Masten hinzugefügt wird.

**Claims**

1. A method of optimizing the electrical power production of a horizontal-axis wind turbine, said wind turbine comprising a tower supporting a nacelle provided with a rotor to which blades are fastened, wherein an angle of inclination of said blades is controlled, **characterized in that** it comprises the following steps:

   a) determining a first angle of inclination of the blades allowing the recovered power to be maximized, by means of the following steps:

   i- generating an electric torque setpoint value $T_e^{sp}$ of said rotor as a function of a rotor velocity measuremen;
   ii- generating a rotor velocity setpoint value $\Omega_r^{sp}$ as a function of a wind velocity measurement $V_w$ through mapping;
   iii- generating an aerodynamic torque setpoint value $T_{aero}^{sp}$ so as to follow this rotor velocity setpoint value;
   iv- determining said first angle of inclination allowing to achieve this aerodynamic torque and to guarantee regulation of the rotor velocity;

   b) selecting an aerodynamic force model for modelling an aerodynamic force produced on the nacelle as a function of a wind velocity, of an angle of inclination and of a rotor velocity;
   c) determining the aerodynamic force produced on the nacelle when the blades are oriented with said first angle;
   d) determining a setpoint value for the aerodynamic force produced on the nacelle when the blades are oriented with said first angle, by decreasing said aerodynamic force determined in step c) by a term defined so as to decrease velocity variations at the top of said tower;
   e) determining a second angle of inclination of the blades allowing to obtain said aerodynamic force setpoint value by inverting said aerodynamic force model and using a wind velocity measurement, a rotor velocity measurement and said aerodynamic force setpoint value; and
   f) orienting the blades at said second angle.

2. A method as claimed in claim 1, wherein said term defined so as to decrease velocity variations at the top of said tower is proportional to a difference between current tower position and velocity values and reference tower position and velocity values, a reference position value being a function of said aerodynamic force determined in step c), and a reference velocity value being a zero value.

3. A method as claimed in any one of the previous claims, wherein said aerodynamic force model that is a function of wind velocity $V_w$, said angle of inclination $\theta$ and rotor velocity $\Omega_r$ is written as follows:

$$F_{aero} = 0.5\rho \Pi R_b^2 c_t V_w^2$$

with:

- $R_b$ : rotor radius;
- $\rho$ air density;
- $c_t$ mapping parameter function of $\dfrac{R_b\Omega_r}{V_w}$ and θ.

4. A method as claimed in claim 3, wherein a term proportional to the tower torsion is added to the term corresponding to the wind velocity of said aerodynamic force model.

5. A method as claimed in any one of the previous claims, wherein said first angle of inclination of the blades allowing the recovered power to be optimized is determined by carrying out the following steps:

a) selecting an aerodynamic force model for modelling the aerodynamic torque produced on the nacelle as a function of a wind velocity $V_w$, of said angle of inclination and of a rotor velocity $\Omega_r$;
b) determining an aerodynamic torque setpoint value by means of said model;
c) determining said first angle of inclination of the blades allowing to obtain said aerodynamic torque setpoint value by inverting said aerodynamic torque model and using a wind velocity measurement, a rotor velocity measurement and said aerodynamic torque setpoint value.

6. A method as claimed in claim 5, wherein said aerodynamic torque model is written as follows:

$$T_{aero} = 0.5\rho \Pi R_b^2 c_q V_w^2$$

with:

- $R_b$ : rotor radius ;
- $\rho$ : air density ;
- $c_q$ mapping parameter and function of $\dfrac{R_b\Omega_r}{V_w}$ and θ.

7. A method as claimed in claim 6, wherein a term proportional to the tower torsion is added to the term corresponding to the wind velocity of said aerodynamic torque model.

**Fig. 1**

**Fig. 2**

**Fig. 3**

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2112376 A2

- US 20060033338 A1

**Littérature non-brevet citée dans la description**

- **BOUKHEZZAR B. ; LUPU L. ; SIGUERDIDJANE H. ; HAND M.** Multivariable control strategy for variable speed, variable pitch wind turbines. *Renewable Energy,* 2007, vol. 32, 1273-1287